# EUROPÄISCHE PATENTSCHRIFT

(11) **EP 3 736 551 B1**
(45) Veröffentlichungstag und Bekanntmachung des Hinweises auf die Patenterteilung: **27.10.2021**
(21) Anmeldenummer: 20168396.8
(22) Anmeldetag: 07.04.2020
(51) Int. Cl.: G01K 1/024, G01K 1/08, G01K 11/26

(54) **TEMPERATURMESSSONDE SOWIE VERFAHREN ZU DEREN HERSTELLUNG**
TEMPERATURE SENSOR AND METHOD FOR THE PRODUCTION THEREOF
SONDE DE MESURE DE TEMPÉRATURE ET SON PROCÉDÉ DE FABRICATION

(30) Priorität: 06.05.2019 DE 102019111609
(43) Veröffentlichungstag der Anmeldung: 11.11.2020
(73) Patentinhaber: Miele & Cie. KG, 33332 Gütersloh (DE)
(72) Erfinder: Scharmann, Jürgen, 33442 Herzebrock-Clarholz (DE)

(56) Entgegenhaltungen:
- DE-A1-102015 109 043

## Beschreibung

Temperaturmesssonde sowie Verfahren zu deren Herstellung Die Erfindung betrifft eine Temperaturmesssonde nach dem Oberbegriff des Patentanspruchs 1 sowie ein Verfahren zur Herstellung einer Temperaturmesssonde nach dem Oberbegriff des Patentanspruchs 12.

Derartige Temperaturmesssonden sowie Verfahren zu deren Herstellung sind in einer Vielzahl von Ausführungsformen bereits vorbekannt.

Beispielsweise offenbart die DE 10 2007 019 403 A1 eine Temperaturmesssonde, umfassend eine wärmeleitende und/oder elektrisch leitende Gehäusehülse und mehreren Temperatursensoren, wobei die Temperatursensoren in der Gehäusehülse angeordnet sind und mit der Gehäusehülse wärmeleitend und/oder elektrisch leitend verbunden sind. Zwecks einer guten wärmeleitenden Verbindung zwischen der Gehäusehülse und den Temperatursensoren ist zwischen der Gehäusehülse und den einzelnen Temperatursensoren eine Wärmeleitpaste angeordnet. Die elektrische Verbindung der einzelnen Temperatursensoren mit der Gehäusehülse erfolgt mittels eines Außenleiters einer Koaxialleitung, mittels der die Temperatursensoren mit einer Antenne der bekannten Temperaturmesssonde elektrisch leitend verbunden sind. Die Temperaturmesssonde ist insbesondere für ein Haushaltsgerät ausgebildet, wobei die als ein elektrisch leitfähiger Abschnitt ausgebildete Gehäusehülse und ein die Antenne aufweisender elektrisch isolierender Abschnitt der daraus bekannten Temperaturmesssonde derart aufeinander abgestimmt sind, dass der Wirkwiderstand der Antenne etwa dem Wirkwiderstand des Temperatursensors in dessen Arbeitsfrequenzbereich entspricht.

Aus der DE 10 2015 109 043 A1 ist ein Kerntemperaturfühler der eingangs genannten Art bekannt. Dort können zwischen der Leiterplatte (Platine 20) und der Gehäusehülse (Rohr 18) Befestigungsmittel wie ein dünner, sich in Längsrichtung erstreckender Draht, ein kugelförmiges Teil oder Silikongel eingebracht sein. Das Einbringen eines Gels in ein dünnes Rohr ist in der Herstellung schwierig, kugelförmige Teile oder Drähte sind schwer zu dimensionieren und können deshalb lockere Passungen erzeugen, bei denen der erwünschte Kontakt zwischen Rohr und Temperatursensor nicht immer sicher gewährleistet ist. Die DE 40 03 638 C2 schlägt bei einem Messfühler vor, Temperaturmesselemente auf einem zu einem Zylinder aufgerollten Federblech anzuordnen.

Der Erfindung stellt sich somit das Problem, eine wärmeleitende und/oder elektrisch leitende Verbindung zwischen dem mindestens einen Temperatursensor und der Gehäusehülse der Temperaturmesssonde zu verbessern.

Erfindungsgemäß wird dieses Problem durch eine Temperaturmesssonde mit den Merkmalen des Patentanspruchs 1 gelöst. Ferner wird dieses Problem durch ein Verfahren zur Herstellung einer Temperaturmesssonde mit den Merkmalen des Patentanspruchs 12 gelöst.

Vorteilhafte Ausgestaltungen und Weiterbildungen der Erfindung ergeben sich aus den nachfolgenden Unteransprüchen.

Erfindungsgemäße Vorteile werden durch eine Temperaturmesssonde erreicht, die eine wärmeleitende und/oder elektrisch leitende Gehäusehülse, mindestens einen auf einer flachen Leiterplatte elektrisch leitend angeordneten Temperatursensor, und eine Anpressvorrichtung umfasst, wobei die Leiterplatte mit dem Temperatursensor in der Gehäusehülse angeordnet ist und der Temperatursensor mit der Gehäusehülse wärmeleitend und/oder elektrisch leitend verbunden ist. Dabei ist der mindestens eine Temperatursensor mittels Federkraft durch die Anpressvorrichtung wärmeleitend und/oder elektrisch leitend gegen die Gehäusehülse vorgespannt. Als Leiterplatte ist eine Platte zu verstehen, auf der elektrische oder elektronische Bauelemente angeordnet und miteinander über in oder an der Platte vorhandene Leiterbahnen elektrisch kontaktiert werden können. Flach bedeutet, dass die Leiterplatte eine Hauptausdehnungsrichtung in lediglich zwei Dimensionen besitzt. Flach bedeutet insbesondere, dass die Leiterplatte ohne eine auf sie einwirkende Kraft nicht geknickt, gerundet oder gewölbt ist. Sie kann allerdings durch eine auf sie einwirkende Kraft wölbbar sein.

Der mit der Erfindung erreichbare Vorteil besteht insbesondere darin, dass eine wärmeleitende und/oder elektrisch leitende Verbindung zwischen dem mindestens einen Temperatursensor und der Gehäusehülse der Temperaturmesssonde verbessert ist. Mittels der Anpressvorrichtung ist zum einen ein für eine ordnungsgemäße Funktion der Temperaturmesssonde erforderlicher definierter wärmeleitender und/oder elektrisch leitender Kontakt des mindestens einen Tempertatursensors an der wärmeleitenden und/oder elektrisch leitenden Gehäusehülse auf konstruktiv einfache und robuste Weise ermöglicht. Darüber hinaus ist dadurch die Verwendung von einer wärmeleitenden und/oder elektrisch leitenden Paste entbehrlich. Derartige Pasten sind bei der Herstellung der Temperaturmesssonde nur schwer dosierbar und zum anderen wirken sich derartige Pasten in der Regel auch störend auf Hochfrequenzeigenschaften von beispielsweise als SAW-Temperatursensoren ausgebildete Temperatursensoren aus. SAW steht dabei für surface acoustic wave.

Grundsätzlich ist die Anpressvorrichtung nach Art, Funktionsweise, Material, Dimensionierung, Anordnung und Anzahl in weiten geeigneten Grenzen frei wählbar.

Erfindungsgemäß wird wenigstens ein Teil der Federkraft durch eine elastische Ausbildung der Gehäusehülse erzeugt.

Auf diese Weise ist ein wärmeleitender und/oder elektrisch leitender Kontakt bei einer Mehrzahl von Temperatursensoren für jeden einzelnen Temperatursensor individuell einstellbar. Eine Mehrzahl von Temperatursensoren, beispielsweise entlang einer Längsachse der Gehäusehülse, ist dann sinnvoll, wenn ein Temperaturverlauf, beispielsweise entlang der vorgenannten Längsachse der Gehäusehülse, ermittelt werden soll. Die Anpressvorrichtung kann dann in einer Presspassung zwischen dem Temperatursensor und der Gehäusehülse angeordnet sein.

Alternativ oder zuätzlich wird wenigstens ein Teil der Federkraft durch eine in der Gehäusehülse angeordnete Federvorrichtung als Anpressvorrichtung erzeugt.

Eine weitere vorteilhafte Weiterbildung der erfindungsgemäßen Temperaturmesssonde sieht vor, dass die Federvorrichtung mindestens eine Blattfeder umfasst. Blattfedern sind in einer Vielzahl von Ausführungsformen für voneinander verschiedene Anwendungsfälle auf dem Markt erhältlich. Ferner sind Blattfedern sehr robust und langlebig.

Eine andere vorteilhafte Weiterbildung der erfindungsgemäßen Temperaturmesssonde sieht vor, dass die Federvorrichtung zumindest teilweise zwischen einer dem mindestens einen Temperatursensor abgewandten Seite der Leiterplatte und der Gehäusehülse angeordnet ist. Hierdurch ist die Seite der Leiterplatte mit dem mindestens einen Temperatursensor auf besonders einfache Weise vor einer ungewünschten mechanischen und/oder elektrischen Beschädigung geschützt. Darüber hinaus ist dadurch die Herstellung der erfindungsgemäßen Temperaturmesssonde vereinfacht.

Eine weitere vorteilhafte Weiterbildung der erfindungsgemäßen Temperaturmesssonde sieht vor, dass die Anpressvorrichtung mindestens ein Rohr, bevorzugt ein elastisches Stahlrohr, umfasst. Ein Rohr, insbesondere ein elastisches Stahlrohr, ist auf der einen Seite kostengünstig und auf der anderen Seite bei der Herstellung der erfindungsgemäßen Temperaturmesssonde leicht handhabbar. Ferner ist dadurch die Federvorrichtung auf eine konstruktiv besonders einfache Weise realisierbar.

Eine vorteilhafte Weiterbildung der erfindungsgemäßen Temperaturmesssonde sieht vor, dass zwischen dem Temperatursensor und der Federvorrichtung und/oder zwischen der dem Temperatursensor abgewandten Seite der Leiterplatte und der Federvorrichtung eine elektrische Isolierung angeordnet ist. Zum einen ist es hierdurch auf konstruktiv einfache Weise möglich, mindestens einen Temperatursensor zu verwenden, der lediglich in einem wärmeleitenden Kontakt mit der Gehäusehülse stehen darf, jedoch für eine ordnungsgemäße Funktion einer elektrischen Isolierung gegenüber der Gehäusehülse bedarf. Beispielsweise seien hier lediglich als PTC-Temperatursensoren oder als NTC-Temperatursensoren ausgebildete Temperatursensoren genannt. PTC steht dabei für positive temperature coefficient und bezeichnet einen Kaltleiter, während NTC für negative temperature coefficient steht und einen Heißleiter bezeichnet. Darüber hinaus kann die elektrische Isolierung gleichzeitig für einen zusätzlichen Schutz der Leiterplatte und/oder des mindestens einen Temperatursensors vor einer Beschädigung bei der Herstellung der Temperaturmesssonde, nämlich bei der Applizierung der Federvorrichtung in der Gehäusehülse, dienen.

Eine besonders vorteilhafte Weiterbildung der erfindungsgemäßen Temperaturmesssonde sieht vor, dass die Gehäusehülse und die Leiterplatte derart elastisch ausgebildet sind, dass die Gehäusehülse um 15°, bevorzugt um 20°, relativ zu einer Längsachse der Gehäusehülse elastisch biegbar ist. Auf diese Weise ist eine robuste Temperaturmesssonde realisiert, die auch nach einer Fehlbedienung ordnungsgemäß funktioniert. Außerdem ist es vorteilhaft, wenn die Gehäusehülse bezüglich ihres Durchmessers elastisch verformbar ist.

Eine weitere vorteilhafte Weiterbildung der erfindungsgemäßen Temperaturmesssonde sieht vor, dass die Gehäusehülse einen Außendurchmesser von kleiner oder gleich 5 mm, bevorzugt kleiner oder gleich 3,5 mm, aufweist. Hierdurch ist die erfindungsgemäße Temperaturmesssonde auch für Messaufgaben unter eingeschränkten Platzverhältnissen vorteilhaft einsetzbar. Ferner kann die erfindungsgemäße Temperaturmesssonde gemäß dieser Weiterbildung auch in Gegenstände, beispielsweise ein Gargut oder dergleichen, eingespießt werden, ohne diese Gegenstände großflächig zu beschädigen.

Eine andere vorteilhafte Weiterbildung der erfindungsgemäßen Temperaturmesssonde sieht vor, dass die Leiterplatte eine Materialstärke von kleiner oder gleich 1 mm, bevorzugt kleiner oder gleich 0,3 mm, aufweist. Auf diese Weise ist zum einen eine Gehäusehülse mit einem lediglich geringen Außendurchmesser und damit eine besonders schlanke Ausführung der erfindungsgemäßen Temperaturmesssonde ermöglicht. Zum anderen ist die Leiterplatte sehr flexibel, so dass eine Herstellung der Temperaturmesssonde vereinfacht ist. Die Leiterplatte kann beispielsweise aus einem Teflonmaterial hergestellt sein.

Ein Ausführungsbeispiel der Erfindung ist in den Zeichnungen rein schematisch dargestellt und wird nachfolgend näher beschrieben. Es zeigt
- Figur 1: ein Ausfühungsbeispiel der erfindungsgemäßen Temperaturmesssonde in einem Querschnitt im Bereich der Gehäusehülse, in teilweiser Darstellung mit der Gehäusehülse in einem Normalzustand,
- Figur 2: das Ausführungsbeispiel in mit der Fig. 1 vergleichbarer Darstellung, mit der Gehäusehülse in einem Verformungszustand,
- Figur 3: das Ausführungsbeispiel in mit der Fig. 2 vergleichbarer Darstellung, mit der vollständigen Federvorrichtung,
- Figur 4: das Ausführungsbeispiel in mit der Fig. 3 vergleichbarer Darstellung, mit der Gehäusehülse in deren Normalzustand,

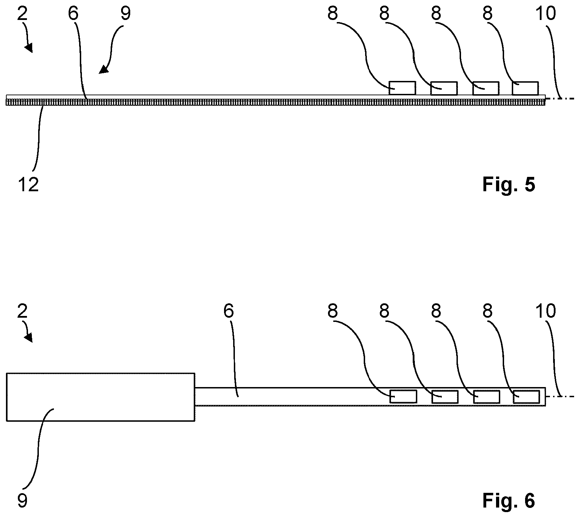

- Figur 5: das Ausführungsbeispiel in einer Seitenansicht, in teilweiser Darstellung, ohne Gehäusehülse,
- Figur 6: das Ausführungsbeispiel in einer Draufsicht, in teilweiser Darstellung, ohne Gehäusehülse,
- Figur 7: das Ausführungsbeispiel bei dessen Herstellung, in einer geschnittenen Seitenansicht, in teilweiser Darstellung,
- Figur 8: das Ausführungsbeispiel bei dessen Herstellung, in einer weiteren geschnittenen Seitenansicht, in teilweiser Darstellung und
- Figur 9: das Ausführungsbeispiel in einer geschnittenen Seitenansicht.

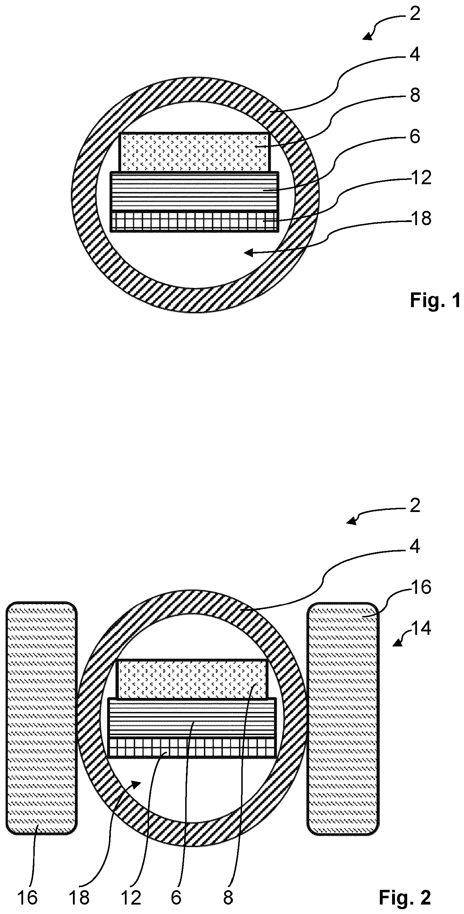

In der Fig. 1 ist ein Ausführungsbeispiel der erfindungsgemäßen Temperaturmesssonde in einer teilweisen Darstellung gezeigt. Die Temperaturmesssonde 2 ist als ein Temperaturspieß für das Einspießen in ein nicht dargestelltes Gargut, beispielsweise ein Fleischstück, ausgebildet. Das Gargut kann dabei auf dem Fachmann bekannte Weise in einem als Gargerät ausgebildeten Haushaltsgerät gegart werden. Das Haushaltsgerät ist ebenfalls nicht dargestellt. Die Temperaturmesssonde 2 umfasst eine wärmeleitende und elektrisch leitende Gehäusehülse 4 und insgesamt vier auf einer flachen Leiterplatte 6 elektrisch leitend angeordnete Temperatursensoren 8, wobei die Leiterplatte 6 mit den Temperatursensoren 8 in der Gehäusehülse 4 angeordnet ist. Die Temperatursensoren 8 sind mit der Gehäusehülse 4 wärmeleitend und elektrisch leitend verbunden und als sogenannte SAW-Temperatursensoren ausgebildet. Die als SAW-Temperatursensoren ausgebildeten Temperatursensoren 8 sind auf dem Fachmann bekannte Weise mit einer nicht dargestellten Antennenstruktur in einem Bereich 9 der Leiterplatte 6 elektrisch leitend verbunden. Die Gehäusehülse 4 ist als eine einseitig offene Hülse aus einem Edelstahlrohr ausgebildet.

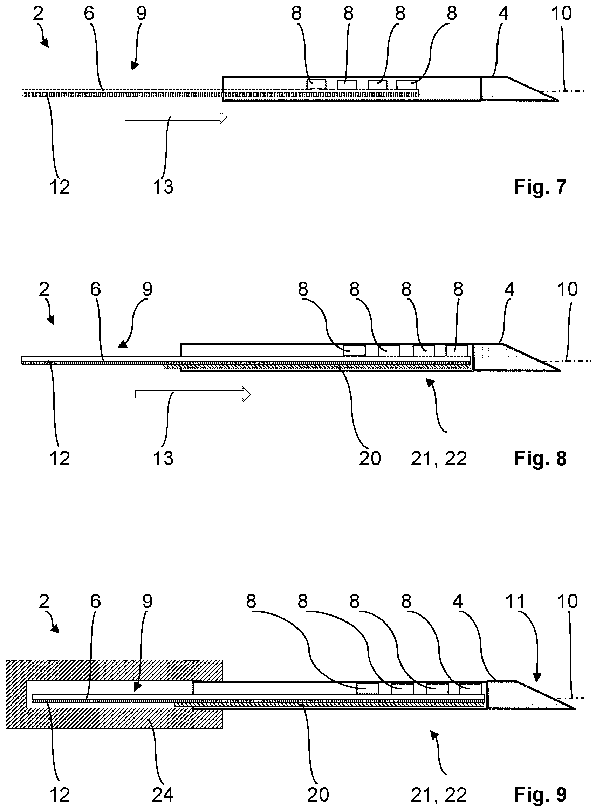

Die Gehäusehülse 4 und die Leiterplatte 6 sind derart elastisch ausgebildet, dass die Gehäusehülse 4 um 20° relativ zu einer Längsachse der Gehäusehülse 4 elastisch biegbar ist und außerdem bezüglich ihres Durchmessers elastisch verformbar ist. Siehe hierzu auch die Fig. 9, in der die Längsachse der Gehäusehülse 4 und damit die Längsachse der erfindungsgemäßen Temperaturmesssonde 2 gemäß des vorliegenden Ausführungsbeispiels durch eine strichpunktierte Linie 10 symbolisiert ist. Wie aus Fig. 9 ebenfalls ersichtlich ist, weist die als Temperaturspieß ausgebildete Temperaturmesssonde 2 an deren geschlossenen Ende zwecks einer besseren Steckbarkeit eine Schräge 11 auf. Die Leiterplatte 6 ist aus einem flexiblen Teflonmaterial ausgebildet und weist eine Materialstärke von lediglich 0,3 mm auf.

Die Leiterplatte 6 mit den vier Temperatursensoren 8 ist bei dem vorliegenden Ausführungsbeispiel als eine SMD-Baugruppe ausgebildet. SMD steht für surface mounted device. Ferner ist auf der den Temperatursensoren 8 abgewandten Seite der Leiterplatte 6 eine elektrische Isolierschicht 12 angeordnet, die gleichzeitig diese Seite der Leiterplatte 6 vor einer mechanischen Beschädigung bei der Herstellung der erfindungsgemäßen Temperaturmesssonde 2 schützt. Darüber hinaus weist die Gehäusehülse 4 einen Außendurchmesser von etwa 3,5 mm auf.

Bei der Herstellung der erfindungsgemäßen Temperaturmesssonde 2 gemäß dem vorliegenden Ausführungsbeispiel wird zunächst die Leiterplatte 6 mit den mit der einen Seite der Leiterplatte 6 elektrisch leitend verbundenen Temperatursensoren 8 und mit der auf der den Temperatursensoren 8 abgewandten Seite der Leiterplatte 6 angeordneten elektrischen Isolierung 12 in die einseitig offene Gehäusehülse 4 eingeschoben. Siehe hierzu Fig. 7. Die Einschubrichtung ist in den Fig. 7 und 8 durch einen Pfeil 13 symbolisiert.

Danach wird die Gehäusehülse 4 mittels eines Spannwerkzeugs 14 mit zwei Spannbacken 16 von einem in der Fig. 1 dargestellten Normalzustand der Gehäusehülse 4 in einen in der Fig. 2 dargestellten Verformungszustand der Gehäusehülse 4 überführt. In dem in der Fig. 2 dargestellten Verformungszustand der Gehäusehülse 4 ist die Gehäusehülse 4 mittels der zwei Spannbacken 16 des Spannwerkzeugs 14 derart elastisch zusammengedrückt, dass die Gehäusehülse 4 eine ovale Form annimmt, so dass sich in der Bildebene von Fig. 2 unterhalb der Leiterplatte 6, also auf der den Temperatursensoren 8 abgewandten Seite der Leiterplatte 6, ein Hohlraum 18 ausbildet.

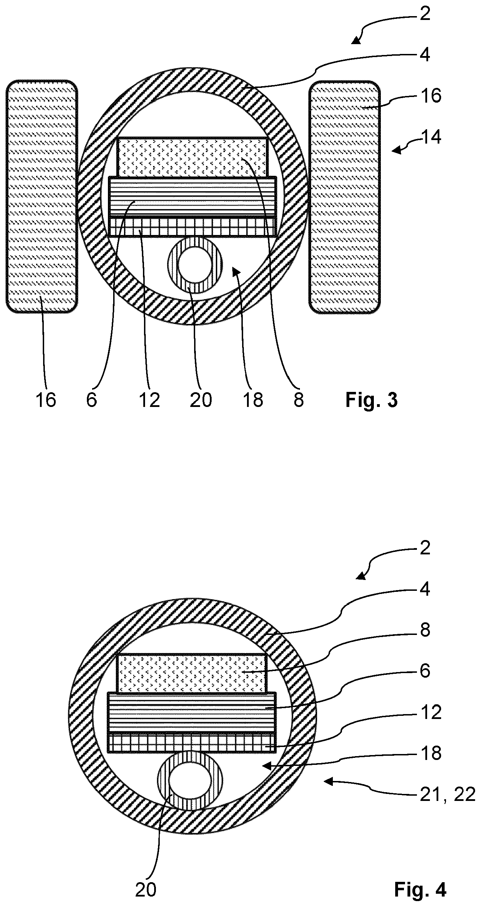

Anschließend wird ein eine Anpressvorrichtung 21, vorzugsweise ein eine Federvorrichtung 22 in Form eines elastischen Stahlrohrs 20 in den Hohlraum 18 der einseitig offenen Gehäusehülse 4 entlang der Einschubrichtung 13 eingeschoben. Siehe hierzu die Fig. 3 und 8. Das Stahlrohr weist bei dem vorliegenden Ausführungsbeispiel einen Außendurchmesser von lediglich 1,0 mm auf. Wie aus einer Zusammenschau der Fig. 2 und 3 hervorgeht, ist der in dem Verformungszustand der Gehäusehülse 4 ausgebildete Hohlraum 18 derart dimensioniert, dass das Stahlrohr 20 mit Spiel in den Hohlraum 18 eingeschoben werden kann.

Nachdem das Stahlrohr 20 auf die vorgenannte Weise in die einseitig offene Gehäusehülse 4 eingeschoben worden ist, wird die Gehäusehülse 4 wieder von deren in den Fig. 2, 3 und 8 gezeigten ovalen Verformungszustand in den in den Fig. 1, 4, 7 und 9 gezeigten kreisförmigen Normalzustand überführt. Hierzu ist das Material und der Aufbau der Gehäusehülse so auszulegen, dass selbst ein Zusammendrücken der Hülse 4 auf einen um 20% reduzierten Durchmesser eine elastische Rückverformung ermöglicht. Es werden die Spannbacken 16 des Spannwerkzeugs 14 von der Gehäusehülse 4 entfernt, so dass die Gehäusehülse 4 aufgrund ihrer Elastizität automatisch vom Verformungszustand in den Normalzustand rücküberführt wird. Entsprechend handelt es sich bei der Verformung der Gehäusehülse 4 bei deren Überführung in deren Verformungszustand um eine rein elastische Verformung. Siehe hierzu auch Fig. 8, die die Gehäusehülse 4 mit eingeschobener Leiterplatte 6 und darauf angeordneten Temperatursensoren 8 und elektrischer Isolierung 12 sowie mit eingeschobenem Stahlrohr 20 zeigt. Wie aus der Fig. 3 ersichtlich ist, wird auch das Stahlrohr 20 bei der Rücküberführung der Gehäusehülse 4 von deren Verformungszustand in deren Normalzustand elastisch verformt, so dass die Temperatursensoren 8 in dem Normalzustand der Gehäusehülse 4 insbesondere mittels der aus dieser elastischen Verformung des Stahlrohrs 20 resultierenden Federkraft des elastisch verformten Stahlrohrs 20 gegen die Gehäusehülse 4 vorgespannt sind.

Anders als in der Fig. 9 dargestellt liegen die vier Temperatursensoren 8 in dem Normalzustand der Gehäusehülse 4 jeweils mittels des Stahlrohrs 20 an der Gehäusehülse 4 wärmeleitend und elektrisch leitend an, wobei die Temperatursensoren 8 mittels des Stahlrohrs 20 gegen die Gehäusehülse 4 vorgespannt sind. Entsprechend ist das Stahlrohr 20 als ein Teil einer Federvorrichtung 22 ausgebildet, wobei die Federvorrichtung 22 neben dem Stahlrohr 20 zusätzlich die elektrische Isolierung 12 und die Leiterplatte 6 umfasst, die ebenfalls eine geringfügige Elastizität aufweisen. Außerdem erzeugt die Rückstellkraft der Gehäusehülse 4 selbst eine Federkraft, über die die Temperatursensoren mittels ders Stahlrohrs 20 als Anpressvorrichtung 21 gegen die Innenwandung der Hülse 4 gedrückt werden.

Abschließend wird die erfindungsgemäße Temperaturmesssonde 2 gemäß dem vorliegenden Ausführungsbeispiel durch ein in der Fig. 9 dargestelltes Griffteil 24 komplettiert, das auf dem Fachmann bekannte Weise mit der Gehäusehülse 4 verbunden wird. Das Griffteil 24 ist als ein Gummiteil, also als ein elektrischer Isolator, ausgebildet und umgibt die nicht dargestellte Antennenstruktur, die in dem Bereich 9 der Leiterplatte 6 angeordnet ist.

Mittels der Erfindung gemäß dem vorliegenden Ausführungsbeispiel ist somit eine auf der einen Seite flexible und auf der anderen Seite robuste Temperaturmesssonde 2 realisiert. Die Temperatursensoren 8 liegen dabei mittels der Anpressvorrichtung 21 bzw. der Federvorrichtung 22 innig, und damit eine ordnungsgemäße Funktion der Temperaturmesssonde 2 gewährleistend, an der Gehäusehülse 4 an. Ferner ist dadurch ein ungewünschtes Klappern von gegen die Gehäusehülse 4 schlagenden Temperatursensoren 8 wirksam verhindert. Die Herstellung der erfindungsgemäßen Temperaturmesssonde gemäß dem vorliegenden Ausführungsbeispiel ist einfach und damit prozesssicher gestaltet.

Die Erfindung ist nicht auf das vorliegende Ausführungsbeispiel begrenzt.

Beispielsweise kann die erfindungsgemäße Temperaturmesssonde bei einer Vielzahl von voneinander verschiedenen Anwendungen vorteilhaft eingesetzt werden. Beispielsweise kann die Temperaturmesssonde auch bei professionellen Gargeräten oder bei andersartigen Haushaltsgeräten und andersartigen professionellen Geräten Verwendung finden.

Die Federvorrichtung ist ebenfalls nicht auf das oben erläuterte Ausführungsbeispiel beschränkt, sondern in weiten geeigneten Grenzen frei wählbar. Beispielsweise kann die Federvorrichtung zumindest teilweise zwischen dem mindestens einen Temperatursensor und der Gehäusehülse angeordnet sein. Möglich ist auch, dass die Federvorrichtung mindestens eine Blattfeder umfasst. Denkbar ist somit, dass zwischen jedem des mindestens einen Temperatursensors und der Gehäusehülse eine Blattfeder angeordnet ist. Wie in dem erläuterten Ausführungsbeispiel ist es möglich, dass eine Kombination von voneinander verschiedenen elastischen Bauteilen die Federvorrichtung ausbildet. Beispielsweise ist es möglich, dass die Federvorrichtung dann zu einem Teil zwischen dem Temperatursensor und der Gehäusehülse und zu einem anderen Teil zwischen einer dem mindestens einen Temperatursensor abgewandten Seite der Leiterplatte und der Gehäusehülse angeordnet ist.

Die Federvorrichtung kann, in Abweichung zu dem vorliegenden Ausführungsbeispiel, lediglich mindestens ein elastisches Bauteil umfassen, das einzig und allein zur Aufbringung der Vorspannung des mindestens einen Temperatursensors gegen die Gehäusehülse ausgebildet und angeordnet sind. Hierdurch ist eine klare Funktionstrennung zwischen der Erzeugung der vorgenannten Vorspannung auf der einen Seite und anderen Funktionen, beispielsweise einer elektrischen Isolierung und/oder einer thermischen Isolierung, ermöglicht. Jedoch ist es auch denkbar, dass Bauteile der erfindungsgemäßen Temperaturmesssonde, die hauptsächlich für eine andere Funktion der Temperaturmesssonde ausgebildet und angeordnet sind, wie beispielsweise die Leiterplatte und/oder die thermische Isolierung, mehr als in dem vorliegenden Ausführungsbeispiel ausgeführt, zur Erzeugung der vorgenannten Vorspannung und damit stärker als Teil der Federvorrichtung ausgebildet sind.

Das mindestens eine Teil der Federvorrichtung kann, im Unterschied zu dem erläuterten Ausführungsbeispiel, auch andere geeignete Querschnittsformen, Dimensionen und Materialien aufweisen. Beispielsweise ist es denkbar, dass das mindestens eine Teil der Federvorrichtung als eine Kombination aus voneinander verschiedenen Materialien und/oder Einzelteilen ausgebildet ist.

Auch der mindestens eine Temperatursensor ist in weiten geeigneten Grenzen frei wählbar. Beispielsweise können anstelle der SAW-Temperatursensoren bei dem erläuterten Ausführungsbeispiel auch PTC-Temperatursensoren oder NTC-Temperatursensoren eingesetzt werden. Bei diesen Temperatursensoren ist dann eine elektrische Isolierung zwischen dem PTC/NTC-Temperatursensor auf der einen Seite und der Gehäusehülse auf der anderen Seite erforderlich. Entsprechend wären derartige Temperatursensoren mittels der Federvorrichtung dann nicht elektrisch leitend, sondern lediglich wärmeleitend mit der Gehäusehülse verbunden.

## Patentansprüche

1. Temperaturmesssonde (2), umfassend eine wärmeleitende und/oder elektrisch leitende Gehäusehülse (4), mindestens einen auf einer flachen Leiterplatte (6) elektrisch leitend angeordneten Temperatursensor (8), und eine Anpressvorrichtung (21), wobei die Leiterplatte (6) mit dem Temperatursensor (8) in der Gehäusehülse (4) angeordnet ist und der Temperatursensor (8) mit der Gehäusehülse (4) wärmeleitend und/oder elektrisch leitend verbunden ist, wobei der mindestens eine Temperatursensor (8) mittels Federkraft durch eine Anpressvorrichtung (21) wärmeleitend und/oder elektrisch leitend gegen die Gehäusehülse (4) vorgespannt ist, und wobei wenigstens ein Teil der Federkraft durch eine elastische Ausbildung der Gehäusehülse (4) erzeugt wird.

2. Temperaturmesssonde nach Anspruch 1, **dadurch gekennzeichnet, dass** wenigstens ein Teil der Federkraft durch eine in der Gehäusehülse (4) angeordnete Federvorrichtung (22) als Anpressvorrichtung (21) erzeugt wird.

3. Temperaturmesssonde nach mindestens einem der vorhergehenden Ansprüche, **dadurch gekennzeichnet, dass** die Anpressvorrichtung (21) zumindest teilweise zwischen dem Temperatursensor und der Gehäusehülse angeordnet ist.

4. Temperaturmesssonde nach mindestens einem der vorhergehenden Ansprüche 2 oder 3, **dadurch gekennzeichnet, dass** die Federvorrichtung (22) mindestens eine Blattfeder umfasst.

5. Temperaturmesssonde (2) nach mindestens einem der vorhergehenden Ansprüche, **dadurch gekennzeichnet, dass** die Anpressvorrichtung (21) mindestens ein Rohr, bevorzugt ein elastisches Stahlrohr (20), umfasst.

6. Temperaturmesssonde (2) nach mindestens einem der vorhergehenden Ansprüche 2 bis 5, **dadurch gekennzeichnet, dass** die Anpressvorrichtung (21) zumindest teilweise zwischen einer dem mindestens einen Temperatursensor (8) abgewandten Seite der Leiterplatte (6) und der Gehäusehülse (4) angeordnet ist.

7. Temperaturmesssonde (2) nach mindestens einem der vorhergehenden Ansprüche 2 bis 6, **dadurch gekennzeichnet, dass** zwischen dem Temperatursensor und der Anpressvorrichtung (21) und/oder zwischen der dem Temperatursensor (8) abgewandten Seite der Leiterplatte (6) und der Federvorrichtung (22) eine elektrische Isolierung (12) angeordnet ist.

8. Temperaturmesssonde (2) nach mindestens einem der vorhergehenden Ansprüche, **dadurch gekennzeichnet, dass** die Gehäusehülse (4) und die Leiterplatte (6) derart elastisch ausgebildet sind, dass die Gehäusehülse (4) um 15°, bevorzugt um 20°, relativ zu einer Längsachse (10) der Gehäusehülse (4) elastisch biegbar ist.

9. Temperaturmesssonde (2) nach mindestens einem der vorhergehenden Ansprüche, **dadurch gekennzeichnet, dass** die Gehäusehülse (4) bezüglich ihres Durchmessers elastisch verformbar ist.

10. Temperaturmesssonde (2) nach mindestens einem der vorhergehenden Ansprüche, **dadurch gekennzeichnet, dass** die Gehäusehülse (4) einen Außendurchmesser von kleiner oder gleich 5 mm, bevorzugt kleiner oder gleich 3,5 mm, aufweist.

11. Temperaturmesssonde (2) nach mindestens einem der vorhergehenden Ansprüche, **dadurch gekennzeichnet, dass** die Leiterplatte (6) eine Materialstärke von kleiner oder gleich 1 mm, bevorzugt kleiner oder gleich 0,3 mm, aufweist.

12. Verfahren zur Herstellung einer Temperaturmesssonde (2) nach mindestens einem der vorhergehenden Ansprüche, das die folgenden Verfahrensschritte in der angegebenen Reihenfolge aufweist:
- Einführen der Leiterplatte (6) mit dem darauf elektrisch leitend angeordneten mindestens einen Temperatursensor (8) in die Gehäusehülse (4), in einem Normalzustand der Gehäusehülse (4),
- Elastische Verformung der Gehäusehülse (4) von dem Normalzustand in einen Verformungszustand der Gehäusehülse (4) und Einführen zumindest eines Teils (20) der Anpressvorrichtung (21) in die Gehäusehülse (4) in einen durch den Verformungszustand erzeugten und für das Einführen dieses Teils (20) der Anpressvorrichtung (21) geeignet ausgebildeten Hohlraum (18),
- Rücküberführung der Gehäusehülse (4) von dem Verformungszustand in den Normalzustand der Gehäusehülse (4), wobei der mindestens eine Temperatursensor (8) in dem Normalzustand der Gehäusehülse (4) mittels der Anpressvorrichtung (21) wärmeleitend und/oder elektrisch leitend gegen die Gehäusehülse (4) vorgespannt ist.

## Claims

1. Temperature measuring probe (2), comprising a thermally conductive and/or electrically conductive housing sleeve (4), at least one temperature sensor (8) which is electrically conductively arranged on a flat printed circuit board (6), and a contact device (21), wherein the printed circuit board (6) together with the temperature sensor (8) is arranged in the housing sleeve (4) and the temperature sensor (8) is thermally and/or electrically conductively connected to the housing sleeve (4), wherein the at least one temperature sensor (8) is thermally and/or electrically conductively biased against the housing sleeve (4) by means of a contact device (21) by spring force, and wherein at least some of the spring force is generated as a result of a resilient design of the housing sleeve (4).

2. Temperature measuring probe according to claim 1, **characterised in that** at least some of the spring force is generated by a spring device (22) arranged in the housing sleeve (4) as the contact device (21).

3. Temperature measuring probe according to at least one of the preceding claims, **characterised in that** the contact device (21) is at least partially arranged between the temperature sensor and the housing sleeve.

4. Temperature measuring probe according to at least one of the preceding claims 2 or 3, **characterised in that** the spring device (22) comprises at least one leaf spring.

5. Temperature measuring probe (2) according to at least one of the preceding claims, **characterised in that** the contact device (21) comprises at least one tube, preferably a resilient steel tube (20).

6. Temperature measuring probe (2) according to at least one of the preceding claims 2 to 5, **characterised in that** the contact device (21) is at least partially arranged between a side of the printed circuit board (6) that faces away from the at least one temperature sensor (8) and the housing sleeve (4).

7. Temperature measuring probe (2) according to at least one of the preceding claims 2 to 6, **characterised in that** electric insulation (12) is arranged between the temperature sensor and the contact device (21) and/or between the side of the printed circuit board (6) that faces away from the temperature sensor (8) and the spring device (22).

8. Temperature measuring probe (2) according to at least one of the preceding claims, **characterised in that** the housing sleeve (4) and the printed circuit board (6) are designed to be resilient such that the housing sleeve (4) is elastically bendable by 15°, preferably by 20°, relative to a longitudinal axis (10) of the housing sleeve (4).

9. Temperature measuring probe (2) according to at least one of the preceding claims, **characterised in that** the housing sleeve (4) is elastically deformable in terms of its diameter.

10. Temperature measuring probe (2) according to at least one of the preceding claims, **characterised in that** the housing sleeve (4) has an outside diameter of less than or equal to 5 mm, preferably less than or equal to 3.5 mm.

11. Temperature measuring probe (2) according to at least one of the preceding claims, **characterised in that** the printed circuit board (6) has a material thickness of less than or equal to 1 mm, preferably less than or equal to 0.3 mm.

12. Method for producing a temperature measuring probe (2) according to at least one of the preceding claims, comprising the following method steps in the specified order:
- inserting the printed circuit board (6) together with the at least one temperature sensor (8) electrically conductively arranged thereon into the housing sleeve (4) in a normal state of the housing sleeve (4),
- elastically deforming the housing sleeve (4) from the normal state into a deformation state of the housing sleeve (4), and inserting at least one part (20) of the contact device (21) into the housing sleeve (4) in a cavity (18) formed by the deformation state and designed so as to be suitable for the insertion of this part (20) of the contact device (21),
- putting the housing sleeve (4) back into the normal state of the housing sleeve (4) from the deformation state, wherein, in the normal state of the housing sleeve (4), the at least one temperature sensor (8) is thermally and/or electrically conductively biased against the housing sleeve (4) by means of the contact device (21).

## Revendications

1. Sonde de mesure de température (2), comprenant un manchon de boîtier (4) conducteur de chaleur et/ou conducteur d'électricité, au moins un capteur de température (8) disposé de manière électriquement conductrice sur une carte de circuits imprimés (6) plate, et un dispositif de pression (21), la carte de circuits imprimés (6) étant disposée avec le capteur de température (8) dans le manchon de boîtier (4) et le capteur de température (8) étant connecté au manchon de boîtier (4) de manière thermiquement conductrice et/ou électriquement conductrice, l'au moins un capteur de température (8) étant précontraint contre le manchon de boîtier (4) par un dispositif de pression (21) de manière thermiquement conductrice et/ou électriquement conductrice au moyen d'une force de ressort, et au moins une partie de la force de ressort étant générée par une configuration élastique du manchon de boîtier (4).

2. Sonde de mesure de température selon la revendication 1, **caractérisée en ce qu'**au moins une partie de la force de ressort est générée par un dispositif de ressort (22) disposé dans le manchon de boîtier (4) en tant que dispositif de pression (21).

3. Sonde de mesure de température selon au moins l'une des revendications précédentes, **caractérisée en ce que** le dispositif de pression (21) est disposé au moins partiellement entre le capteur de température et le manchon de boîtier.

4. Sonde de mesure de température selon au moins l'une des revendications précédentes 2 ou 3, **caractérisée en ce que** le dispositif de ressort (22) comprend au moins un ressort à lames.

5. Sonde de mesure de température (2) selon au moins l'une des revendications précédentes, **caractérisée en ce que** le dispositif de pression (21) comprend au moins un tube, de préférence un tube en acier élastique (20).

6. Sonde de mesure de température (2) selon au moins l'une des revendications précédentes 2 à 5, **caractérisée en ce que** le dispositif de pression (21) est disposé au moins partiellement entre une face de la carte de circuits imprimés (6) opposée à l'au moins un capteur de température (8) et le manchon de boîtier (4).

7. Sonde de mesure de température (2) selon au moins l'une des revendications précédentes 2 à 6, **caractérisée en ce qu'**une isolation électrique (12) est disposée entre le capteur de température et le dispositif de pression (21) et/ou entre la face de la carte de circuits imprimés (6) opposée au capteur de température (8) et le dispositif de ressort (22).

8. Sonde de mesure de température (2) selon au moins l'une des revendications précédentes, **caractérisée en ce que** le manchon de boîtier (4) et la carte de circuits imprimés (6) sont conçus de manière élastique de telle sorte que le manchon de boîtier (4) est pliable élastiquement de 15°, de préférence de 20°, par rapport à un axe longitudinal (10) du manchon de boîtier (4).

9. Sonde de mesure de température (2) selon au moins l'une des revendications précédentes, **caractérisée en ce que** le manchon de boîtier (4) est déformable élastiquement en ce qui concerne son diamètre.

10. Sonde de mesure de température (2) selon au moins l'une des revendications précédentes, **caractérisée en ce que** le manchon de boîtier (4) présente un diamètre extérieur inférieur ou égal à 5 mm, de préférence inférieur ou égal à 3,5 mm.

11. Sonde de mesure de température (2) selon au moins l'une des revendications précédentes, **caractérisée en ce que** la carte de circuits imprimés (6) présente une épaisseur de matériau inférieure ou égale à 1 mm, de préférence inférieure ou égale à 0,3 mm.

12. Procédé destiné à la fabrication d'une sonde de mesure de température (2) selon au moins l'une des revendications précédentes, qui présente les étapes de procédé suivantes dans l'ordre indiqué :
- insertion de la carte de circuits imprimés (6) avec l'au moins un capteur de température (8) disposé de manière électriquement conductrice au-dessus de celle-ci dans le manchon de boîtier (4), lorsque le manchon de boîtier (4) est dans un état normal,
- déformation élastique du manchon de boîtier (4) de l'état normal à un état de déformation du manchon de boîtier (4) et insertion d'au moins une partie (20) du dispositif de pression (21) dans le manchon de boîtier (4) dans une cavité (18) générée par l'état de déformation et adaptée pour l'insertion de ladite partie (20) du dispositif de pression (21),
- retour du manchon de boîtier (4) de l'état de déformation à l'état normal du manchon de boîtier (4), l'au moins un capteur de température (8) étant précontraint contre le manchon de boîtier (4) au moyen du dispositif de pression (21) de manière thermiquement conductrice et/ou électriquement conductrice dans l'état normal du manchon de boîtier (4).
